# FASCICULE DE BREVET EUROPEEN

(11) **EP 1 177 415 B1**
(45) Date de publication et mention de la délivrance du brevet: **02.03.2005**
(21) Numéro de dépôt: 00927324.4
(22) Date de dépôt: 10.05.2000
(51) Int. Cl.: G01F 1/698

(54) **DEBITMETRES MASSIQUES DU TYPE A FIL RESISTIF**
MASSENDURCHFLUSSMESSER MIT WIDERSTANDSDRAHT
RESISTIVE WIRE MASS FLOW METERS

(30) Priorité: 11.05.1999 FR 9905987
(43) Date de publication de la demande: 06.02.2002
(73) Titulaire: AUXITROL SA, 18941 Bourges Cedex (FR)
(72) Inventeur: BERNARD, Marc, F-18400 Saint-Florent-sur-Cher (FR); COLLET, Eric, F-18230 Saint-Doulchard (FR)
(74) Mandataire: Callon de Lamarck, Jean-Robert
(86) Numéro de dépôt international: PCT/FR2000/001255
(87) Numéro de publication internationale: WO 2000/068651

(56) Documents cités:
- EP-A- 0 210 509
- FR-A- 2 680 872
- FR-A- 2 728 071
- US-A- 4 335 605

## Description

La présente invention est relative aux débitmètres massiques du type à fil résistif.

La demanderesse a déjà proposé dans sa demande de brevet FR-2.728.071 un débitmètre à fil chaud apte à mesurer un débit massique.

Des impulsions de courant y sont envoyées sur le fil résistif pendant des périodes données et la vitesse de refroidissement du fil entre les impulsions est mesurée.

On s'est aperçu que de tels capteurs de mesures à fil chaud pouvaient présenter une dérive dans le temps du fait notamment que des particules de graisse peuvent se déposer sur le fil résistif, faussant ainsi le comportement thermique de celui-ci.

Un but de l'invention est de proposer un débitmètre massique comportant des moyens permettant de détecter cette dérive.

Un autre but de l'invention est de proposer un débitmètre massique comportant des moyens permettant de détecter des anomalies de fonctionnement de l'électronique associée audit débitmètre.

Il est déjà connu par US 4 335 605 de comparer des valeurs mesurées à des valeurs seuils pour détecter d'éventuelles anomalies de fonctionnement d'un débitmètre.

Un tel traitement n'est pas d'une grande efficacité et ne permet pas de déterminer une éventuelle dérive ou d'éventuelles anomalies suffisamment tôt.

Il ne permet pas non plus une détermination permettant de corriger les éventuelles dérives ou anomalies

L'invention propose quant à elle un débitmètre massique, du type comprenant une sonde chauffante placée dans le trajet d'un fluide dont on souhaite mesurer le débit, des moyens pour appliquer à ladite sonde des impulsions de courant, des moyens de mesure pour déterminer sa vitesse de refroidissement entre lesdites impulsions, caractérisé en ce qu'il comporte des moyens de traitement arrangés pour déterminer un paramètre caractéristique d'au moins une portion d'une courbe de refroidissement du fluide et pour déduire de ce paramètre une information relative à une éventuelle dérive ou anomalie de fonctionnement.

Avantageusement, les moyens de traitement déterminent le paramètre à l'issue de la génération d'une impulsion de courant en l'absence de circulation de fluide et comportent des moyens pour générer une telle impulsion, lors de la détection d'un début de phase d'utilisation du débitmètre, avant que la circulation du fluide ne soit établie.

Selon un mode de réalisation particulièrement avantageux, les moyens de traitement comportent des moyens pour déterminer un paramètre caractéristique d'une première phase de refroidissement pendant laquelle la sonde chauffante se refroidit par conduction à travers la matière qui la compose, ainsi qu'à travers sa gaine et d'éventuels dépôts huileux, graisseux ou solides, lesdits moyens de traitement comportant également des moyens pour déduire de ce paramètre une information relative à une éventuelle dérive due audits dépôts huileux, graisseux ou solides.

Egalement, les moyens de traitement peuvent comporter des moyens pour déterminer un paramètre caractéristique d'une deuxième phase de refroidissement pendant laquelle la sonde chauffante se refroidit également par conduction dans le fluide, mais à débit de fluide nul, pas par convection, ainsi que des moyens pour déduire de ce paramètre une information relative à une éventuelle anomalie de fonctionnement de l'électronique dudit débitmètre.

D'autres caractéristiques et avantages de l'invention ressortiront encore de la description qui suit.

Cette description est purement illustrative et non limitative. Elle doit être lue en regard des dessins annexés sur lesquels :
- la figure 1 est une vue en coupe verticale axiale d'un débitmètre massique à fil chaud,
- la figure 2 est une vue en coupe transversale du débitmètre de la figure 1,
- la figure 3 est un diagramme de la température du fil en fonction du temps ;
- la figure 4 est une représentation schématique en perspective d'un corps de profilé dans lequel le fil d'un débitmètre conforme à l'invention peut être reçu.

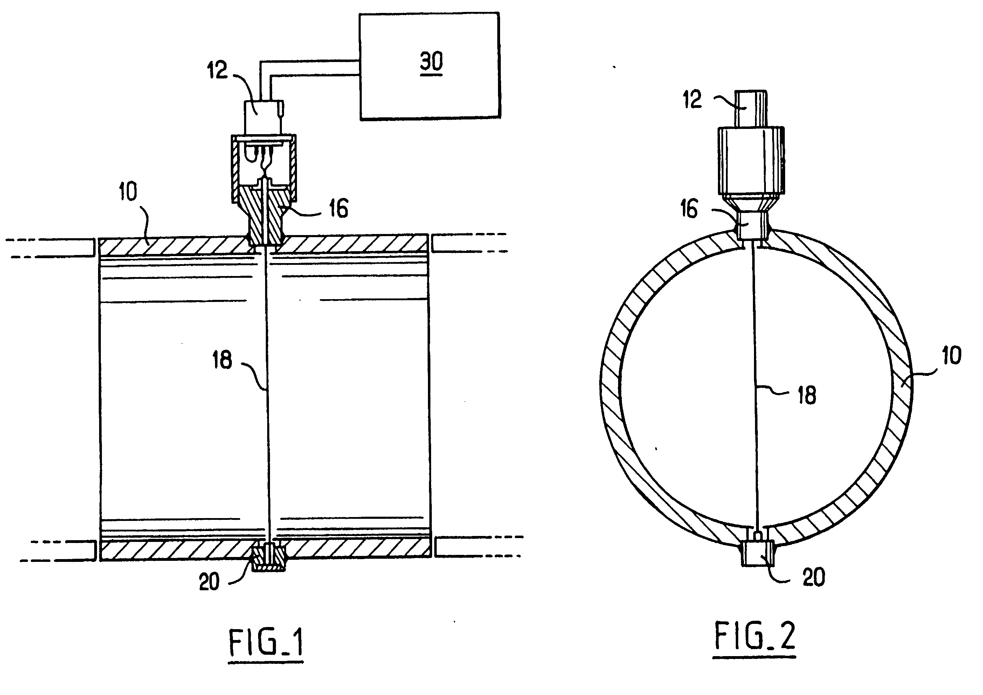

On a représenté sur les figures 1 et 2 un débitmètre massique à fil chaud qui est par exemple du type de celui décrit dans la demande de brevet FR-2.728.071 de la demanderesse, à laquelle on pourra avantageusement se référer.

Ce débitmètre comprend un corps creux généralement cylindrique 10, dans lequel circule le fluide dont on souhaite mesurer le débit massique. Ce corps 10 se raccorde à des conduites d'amenée de fluide et de départ de fluide par des moyens étanches appropriés.

Dans le corps 10 s'étend diamétralement un fil résistif 18, par exemple constitué par un conducteur résistif plié à 180° à son extrémité inférieure et s'étendant en double dans une gaine.

L'extrémité inférieure dudit fil 18 est sertie dans une bague cylindrique 20 soudée dans un perçage du corps 10.

A son extrémité supérieure, le fil résistif traverse de façon électriquement isolante un alésage central d'une monture 16 fixée dans un autre perçage du corps 10 par soudage, ledit fil 18 étant fixé à ladite monture 16. Sur ladite monture est monté un connecteur 12 pour le raccordement dudit fil 18 à une unité électronique de traitement 30.

En fonctionnement, on établit un chauffage du fil résistif 18 en y appliquant des impulsions de courant bien déterminées et l'on étudie la pente de la courbe de refroidissement du fil lorsqu'entre les impulsions successives, seul un faible courant, non significatif, le traverse.

La connaissance de cette pente permet à l'unité de traitement 30 de calculer le débit massique du fluide, ladite pente étant en effet directement fonction dudit débit massique.

Le circuit électronique du débitmètre est conçu pour que l'unité de commande 30 puisse connaître à tout moment d'une part la tension U aux bornes du fil 18, et d'autre part le courant I qui le traverse. On en déduit la valeur instantanée de sa résistance R = U/I, et donc la valeur instantanée de sa température, la résistance variant en fonction de la température selon une loi monotone que l'on connaît préalablement.

Grâce au fait que la mesure s'effectue par détermination d'une pente (mesure différentielle), le débitmètre ne nécessite aucune référence, contrairement à la majorité des systèmes antérieurement connus.

Ainsi, le débitmètre est insensible aux variations de température du fluide dont on souhaite mesurer le débit.

L'unité de traitement 30 comporte des moyens cadencés pour appliquer au fil des impulsions de courant, avec à chaque fois la même valeur constante de courant, selon un rapport cyclique bien déterminé. Elle comporte également des moyens capables, pendant chaque période séparant deux impulsions de courant successives, d'acquérir la température du fil par mesure de sa résistance. Pour pouvoir effectuer cette mesure, il est nécessaire de faire circuler un très faible courant constant dans le fil, la valeur de ce courant étant choisie de manière à ne pas influencer le comportement thermique du fil pendant son refroidissement. Par exemple, le courant est choisi de manière à dégager une puissance de quelques milliwatts, à comparer à quelques dizaines de watts pendant les impulsions de courant proprement dites. Ainsi la température du fil pendant son refroidissement est directement proportionnelle à la tension à ses bornes.

L'unité de traitement 30 comporte un circuit de dérivation de cette tension en fonction du temps. La dérivée ainsi obtenue est une fonction du débit massique et l'unité de traitement 30 comporte des moyens de conversion qui déterminent le débit massique en fonction de la dérivée de la tension. Par exemple, l'unité 30 comporte des moyens de mémorisation dans lesquels des tables de conversion sont stockées.

Par ailleurs, l'unité de traitement 30 comporte des moyens pour comparer les réponses obtenues en tension ou en température à des réponses théoriques préalablement mémorisées.

Par exemple, avant toute injection de fluide (kérosène par exemple) dans le corps 10, l'unité de traitement 30 envoie dans le fil conducteur 18 une impulsion de courant.

La réponse en température qui en résulte est comparée à une réponse théorique, qui est celle du débitmètre en sortie d'usine, en l'absence de débit.

Plus précisément l'unité de traitement 30 détermine sur la courbe de refroidissement deux phases I et II séparées par une discontinuité de mode de refroidissement.

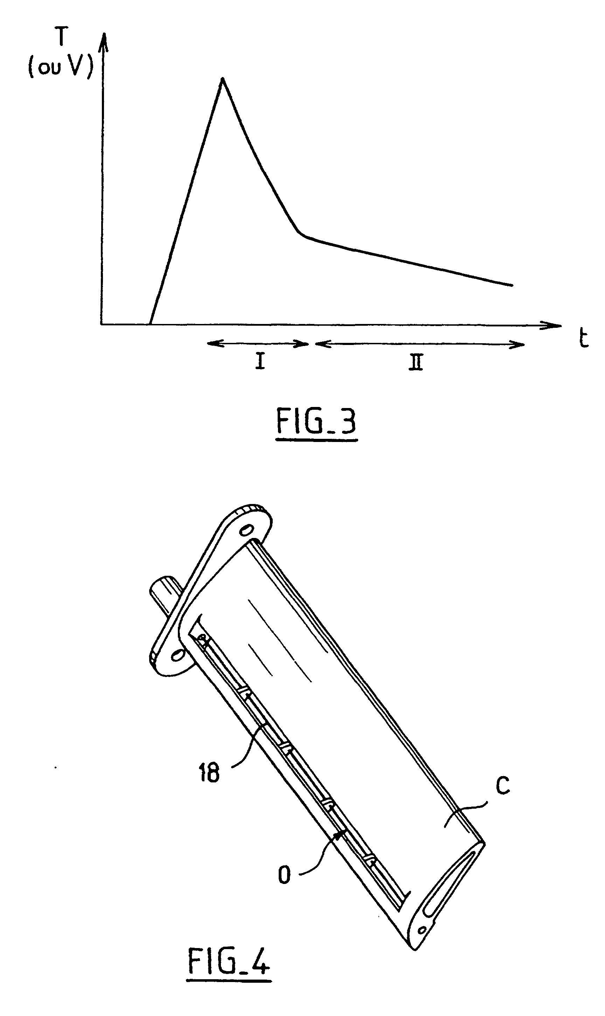

Les inventeurs se sont en effet aperçus que la courbe de refroidissement comportait deux portions distinctes :
Une première phase où la chaleur générée par l'impulsion de courant est uniquement conduite par la matière qui constitue le fil 18, par la gaine de celui-ci et éventuellement par les dépôts huileux, graisseux ou solides autour de ladite gaine (phase I sur la figure 3).
Une deuxième phase où, tant que la convection autour du débitmètre ne s'est pas encore établie, la chaleur est conduite dans le fluide (phase II sur la figure 3).

Les courbes de refroidissement pendant l'une et l'autre de ces deux phases sont des portions de courbes en exp ( - t / τ₁ ) et exp( - t / τ₂ ), où τ₁ et τ₂ sont des constantes de temps qui sont caractéristiques de l'une et l'autre des deux phases.

Or, pour un fil chauffant donné, le paramètre τ₁ est constant en fonction du débit massique.

La constante de temps τ₂ est quant à elle décroissante en fonction du débit massique.

La détermination de la constante de temps τ₁ par l'unité de traitement 30 lorsqu'une impulsion de courant est envoyée dans le fil conducteur 18 en l'absence de circulation de fluide dans le corps 10 permet à l'unité de traitement 30 de détecter la présence de dépôts huileux, graisseux ou solides.

Le cas échéant, l'unité 30 corrige les paramètres du traitement qu'elle met en oeuvre pour intégrer la dérive due à ces dépôts.

Egalement, l'unité de traitement détermine le paramètre τ₂. Elle compare la valeur obtenue pour ce paramètre τ₂ en l'absence de circulation de fluide dans le corps 10 à une valeur théorique. Dans le cas où la différence entre cette valeur théorique et la valeur déterminée pour le paramètre τ₂ est supérieure à un seuil donné, l'unité de traitement 30 en déduit l'existence d'une anomalie dans le fonctionnement de l'électronique associée au débitmètre.

Selon un autre aspect avantageux de l'invention, le fil 18 du débitmètre peut être reçu dans un profilé du type de celui qui a été décrit dans la demande de brevet FR 91 10845 de la demanderesse, à laquelle on pourra avantageusement se référer.

Un tel corps profilé a été représenté sur la figure 4 sur laquelle il a été référencé par C. Il présente une forme de type aile d'avion qui peut être ou non symétrique.

Une ouverture O traverse ledit corps profilé C. le fil 18 s'étend dans la longueur de cette ouverture.

La forme de ladite ouverture O et l'incidence dudit corps profilé C dans le flux de fluide étant telles que la couche limite et le flux à mesurer pénètrent dans ladite ouverture O de façon à éviter ou réduire les impacts de particules (de solide dans le cas d'un fluide liquide ; de solide et liquide dans le cas d'un fluide gazeux).

## Revendications

1. Débitmètre massique, du type comprenant une sonde chauffante (18) placée dans le trajet d'un fluide dont on souhaite mesurer le débit, des moyens (30) pour appliquer à ladite sonde des impulsions de courant, des moyens de mesure pour déterminer sa vitesse de refroidissement entre lesdites impulsions, **caractérisé en ce qu'**il comporte des moyens de traitement (30) arrangés pour déterminer un paramètre caractéristique d'au moins une portion d'une courbe de refroidissement du fluide et pour déduire de ce paramètre une information relative à une éventuelle dérive ou anomalie de fonctionnement.

2. Débitmètre massique selon la revendication 1, **caractérisé en ce que** les moyens de traitement (30) déterminent le paramètre à l'issue de la génération d'une impulsion de courant à débit de fluide nul et comportent des moyens pour générer une telle impulsion, lors de la détection d'un début de phase d'utilisation du débitmètre, avant que la circulation du fluide ne soit établie.

3. Débitmètre massique selon l'une des revendications précédentes, **caractérisé en ce que** les moyens de traitement (30) comportent des moyens pour déterminer un paramètre caractéristique d'une première phase de refroidissement (I) pendant laquelle la sonde chauffante se refroidit par conduction à travers la matière qui la compose, ainsi qu'à travers sa gaine et d'éventuels dépôts huileux, graisseux ou solides, lesdits moyens de traitement comportant également des moyens pour déduire de ce paramètre une information relative à une éventuelle dérive due audits dépôts huileux, graisseux ou solides.

4. Débitmètre massique selon la revendication 1, **caractérisé en ce que** les moyens de traitement (30) comportent des moyens pour déterminer un paramètre caractéristique d'une deuxième phase de refroidissement pendant laquelle la sonde chauffante (18) se refroidit également par conduction dans le fluide, mais à débit de fluide nul, pas par convection, ainsi que des moyens pour déduire de ce paramètre une information relative à une éventuelle anomalie de fonctionnement de l'électronique dudit débitmètre.

5. Débitmètre massique selon l'une des revendications précédentes, **caractérisé en ce qu'**il comporte un corps profilé (C) de type aile d'avion et **en ce qu'**une ouverture (O) traverse ledit corps profilé (C), la sonde chauffante s'étendant dans la longueur de cette ouverture, la forme de ladite ouverture (O) et l'incidence dudit corps profité (C) dans le flux de fluide étant telles que la couche limite et le flux à mesurer pénètrent dans ladite ouverture (O) de façon à éviter ou réduire les impacts des particules sur le fil.

## Patentansprüche

1. Massendurchsatzmesser des Typs, umfassend eine Heizsonde (18), welche in dem Weg eines Fluids, von welchem man den Durchsatz zu messen wünscht, angeordnet ist, Mittel (30), um auf die Sonde Stromstöße auszuüben, Messmittel, um deren Abkühlungsgeschwindigkeit zwischen den Stößen zu bestimmen, **dadurch gekennzeichnet, dass** er Verarbeitungsmittel (30) umfasst, welche vorgesehen sind, um einen charakteristischen Parameter von wenigstens einem Abschnitt einer Abkühlungskurve des Fluids zu bestimmen und um aus diesem Parameter eine Information, welche sich auf eine(n) etwaige(n) Funktionsabweichung oder Funktionsfehler bezieht, abzuleiten.

2. Massendurchsatzmesser nach Anspruch 1, **dadurch gekennzeichnet, dass** die Verarbeitungsmittel (30) den Parameter am Ende der Erzeugung eines Stromstoßes bei einem Fluiddurchsatz von Null bestimmen und Mittel umfassen, um einen solchen Stoß während der Detektion eines Einsatzphasenbeginns des Durchsatzmessers, bevor die Zirkulation des Fluids sich etabliert hat, zu erzeugen.

3. Massendurchsatzmesser nach einem der vorangegangenen Ansprüche, **dadurch gekennzeichnet, dass** die Verarbeitungsmittel (30) Mittel umfassen, um einen Parameter zu bestimmen, der charakteristisch ist für eine erste Abkühlungsphase (I), während welcher die Heizsonde sich durch Leitung durch die Materie, die sie bildet, wie auch durch ihre Ummantelung und etwaige ölartige, fettartige oder feste Ablagerungen hindurch abkühlt, wobei die Verarbeitungsmittel gleichfalls Mittel umfassen, um aus diesem Parameter eine Information, welche sich auf eine etwaige Abweichung aufgrund der ölartigen, fettartigen oder festen Ablagerungen bezieht, abzuleiten.

4. Massendurchsatzmesser nach Anspruch 1, **dadurch gekennzeichnet, dass** die Verarbeitungsmittel (30) Mittel, um einen Parameter zu bestimmen, der charakteristisch ist für eine zweite Abkühlungsphase, während welcher die Heizsonde (18) sich gleichfalls durch Leitung in dem Fluid, aber bei einen Fluiddurchsatz von Null, nicht durch Konvektion abkühlt, wie auch Mittel, um aus diesem Parameter eine Information, welche sich auf einen etwaigen Funktionsfehler der Elektronik des Durchsatzmessers bezieht, abzuleiten, umfassen.

5. Massendurchsatzmesser nach einem der vorangegangenen Ansprüche, **dadurch gekennzeichnet, dass** er einen stromlinienförmig hergestellten Körper (C) vom Typ einer Flugzeugtragfläche umfasst und dass eine Öffnung (O) den stromlinienförmig hergestellten Körper (C) durchquert, wobei die Heizsonde sich in der Länge dieser Öffnung erstreckt, wobei die Form der Öffnung (O) und der Anstellwinkel des stromlinienförmig hergestellten Körpers (C) in dem Fluidstrom derart sind, dass die Randschicht und der zu messende Strom in die Öffnung (O) derart eindringen, dass die Aufschläge von Teilchen auf den Draht vermieden oder verringert werden.

## Claims

1. Mass flow meter of the type comprising a heating probe (18) placed in the path of a fluid whose flow rate is to be measured, means (30) of applying current pulses to said probe, measuring means of determining its cooling speed between said pulses, **characterized in that** it comprises processing means (30) arranged for determining a characteristic parameter of at least a portion of a cooling curve of the fluid and for deriving from that parameter data relating to a possible operational drift or anomaly.

2. Mass flow meter according to Claim 1, **characterized in that** the processing means (30) determine the parameter after the generation of a current pulse with a zero fluid flow and comprising means of generating such a pulse when a start of a phase of utilizing the flow meter is detected and before the flow of the fluid is established.

3. Mass flow meter according to one of the preceding claims, **characterized in that** the processing means (30) comprise means of determining a characteristic parameter of a first cooling phase (I) during which the heating probe is cooled by conduction through the material which forms it and through its cover and possible oily, greasy or solid deposits, said processing means also comprising means of deriving from this parameter data relating to a possible drift due to said oily, greasy or solid deposits.

4. Mass flow meter according to Claim 1, **characterized in that** the processing means (30) comprises means of determining a characteristic parameter of a second cooling phase during which the heating probe (18) is cooled, also by conduction, in the fluid, but at a zero fluid flow rate and not by convection, as well as means for deriving from this parameter data relating to a possible operational anomaly of the electronics of said flow meter.

5. Mass flow meter according to one of the preceding claims, **characterized in that** it comprises a profiled body (C) of the aircraft wing type and **in that** the opening (O) traverses said profiled body (C), the heating probe extending along the length of this opening, the shape of said opening (O) and the incidence of said profiled body (C) in the flow of fluid being such that the boundary layer and the flow to be measured penetrate into said opening (O) in such a way as to avoid or reduce the impacts of particles on the wire.
